# EUROPEAN PATENT SPECIFICATION

(11) **EP 3 530 903 B1**
(45) Date of publication and mention of the grant of the patent: **11.11.2026**
(21) Application number: 19156273.5
(22) Date of filing: 06.09.2013
(51) Int. Cl.: F02B 19/16, F02B 19/12, F02B 19/10, H01T 13/54, F02B 17/00, F02B 23/04, F02B 23/06

(54) **TWO-STAGE PRECOMBUSTION CHAMBER FOR LARGE BORE GAS ENGINES**
ZWEISTUFIGE VORBRENNKAMMER FÜR GROSS-BOHRUNG GASMOTOREN
CHAMBRE DE PRÉCOMBUSTION À DEUX ÉTAGES POUR DES MOTEURS À GAZ À GRAND ALÉSAGE

(30) Priority: 06.09.2012 US 201261697628 P
(43) Date of publication of application: 28.08.2019
(62) Document number(s) of the earlier application(s) in accordance with Art. 76 EPC: 13835622.5 / 2 893 601
(73) Proprietor: Prometheus Applied Technologies, LLC, Fort Collins, CO 80525 (US)
(72) Inventor: SOTIROPOULOU, Maria Emmanuella, Fort Collins, CO 80526 (US); LEPLEY, David Thomas, Fort Collins, CO 80526 (US); TOZZI, Luigi P., Fort Collins, CO 80525 (US)
(74) Representative: Eisenführ Speiser

(56) References cited:
- WO-A2-2012/091739
- US-A- 4 987 868
- US-A- 5 105 780
- US-A- 5 222 993
- US-A- 5 947 076
- US-A1- 2006 219 210
- US-A1- 2011 108 012
- US-A1- 2012 125 287
- CHO ET AL: "Spark ignition natural gas engines-A review", ENERGY CONVERSION AND MANAGEMENT, ELSEVIER SCIENCE PUBLISHERS, OXFORD, GB, vol. 48, no. 2, 1 February 2007 (2007-02-01), pages 608 - 618, XP022109828, ISSN: 0196-8904, DOI: 10.1016/J.ENCONMAN.2006.05.023

## Description

### FIELD OF THE INVENTION

The disclosure generally relates to systems and methods for a two-stage precombustion chamber, and more particularly to a two-stage precombustion chamber that reduces NOX emissions in fueled, precombustion chamber gas engines. The two-stage precombustion chamber can be also achieved by simply replacing a conventional spark plug, used with conventional fueled prechamber, with a passive prechamber spark plug.

### BACKGROUND OF THE INVENTION

Large gas engines with cylinder bore diameter greater than 200 mm typically use fuelfed, rich precombustion chambers to enhance flame propagation rate with lean air/fuel mixtures in the main combustion chamber. A drawback of this type of system is that a fuel rich prechamber generates very high NOx and even though the main chamber generates very low NOx the combined amount remains higher than the legislated amount.

Examples of two-stage precombustion chambers are found in US 2006/219210 A1 and US 2012/125287 A1.

There is a need to address the foregoing deficiencies in the art.

### SUMMARY OF THE INVENTION

In certain embodiments, a two-stage precombustion chamber is disclosed comprising: a first prechamber stage enclosing a first prechamber volume, the first prechamber stage comprising: one or more first stage holes communicating between the first prechamber volume and a second prechamber volume; a primary electrode disposed within the first prechamber volume; and one or more ground electrodes disposed within the first prechamber volume and offset from the primary electrode to form one or more electrode gaps; and a second prechamber stage enclosing the second prechamber volume, the second prechamber stage comprising: one or more second stage holes communicating between the second prechamber volume and a combustion chamber volume. A first fuel concentration in the first prechamber volume may be higher than a second fuel concentration in the second prechamber volume. The first fuel concentration may be higher than the second fuel concentration before a spark is introduced.

The first fuel concentration may be at least about 5% higher than the second fuel concentration. The first prechamber volume may be smaller than the second prechamber volume. The first prechamber volume may be less than about 50% of the second prechamber volume. The two-stage precombustion chamber may further comprise a fuel admission point configured to admit fuel into the first prechamber volume. The two-stage precombustion chamber may further comprise a fuel admission point configured to admit fuel into the second prechamber volume. Each of the one or more first stage holes may define a first stage hole axis and each of the one or more second stage holes may define a second stage hole axis and each first stage hole axis and each second stage hole axis may define an index angle, a penetration angle and a rotational offset. The index angle, the penetration angle, the rotational offset of the first stage holes and the second stage holes, the first prechamber volume and aspect-ratio, the second prechamber volume and aspect-ratio, and the location of one or more spark gaps within the first prechamber volume may be selected to generate the first fuel concentration higher than the second fuel concentration. The first stage prechamber may comprises a passive prechamber spark plug, with a heat range selected to maintain surface temperatures of the passive precharnber spark plug below a thermal runaway point dictated by the air-fuel mixture composition and by the level of combustion mean effective pressure at which the engine operates.

In certain embodiments, a two-stage precombustion chamber is disclosed comprising: a first prechamber stage enclosing a first prechamber volume, the first prechamber stage comprising: one or more first stage holes communicating between the first prechamber volume and a second prechamber volume; a primary electrode disposed within the first prechamber volume; and one or more ground electrodes disposed within the first prechamber volume and offset from the primary electrode to form one or more electrode gaps; and a second prechamber stage comprising: an external surface and an internal surface enclosing the second prechamber volume; and one or more second stage holes communicating between the internal surface and the external surface. A first fuel concentration in the first prechamber volume may be higher than a second fuel concentration in the second prechamber volume. The first fuel concentration may be higher than the second fuel concentration before a spark is introduced. The first fuel concentration may be at least about 5 % higher than the second fuel concentration. The first prechamber volume may be smaller than the second prechamber volume. The first prechamber volume may be less than about 50 ⁰ 0 of the second prechamber volume. The two-stage precombustion chamber may further comprise a fuel admission point configured to admit fuel into the first prechamber volume. The two-stage precombustion chamber may further comprise a fuel admission point configured to admit fuel into the second prechamber volume. Each of the one or more first stage holes may define a first stage hole axis and each of the one or more second stage holes may define a second stage hole axis and each first stage hole axis and each second stage hole axis may define an index angle, a penetration angle and a rotational offset. The index angle, the penetration angle, the rotational offset of the first stage holes and the second stage holes, the first prechamber volume and aspect-ratio, the second prechamber volume and aspect-ratio, and the location of one or more spark gaps within the first prechamber volume may be selected to generate the first fuel concentration higher than the second fuel concentration.

In certain embodiments, a method of reducing NOx levels in gas engines is disclosed, comprising: providing a two-stage precombustion chamber comprising: a first prechamber stage enclosing a first prechamber volume, the first prechamber stage comprising: one or more first stage holes communicating between the first prechamber volume and a second prechamber volume; a primary electrode disposed within the first prechamber volume; one or more ground electrodes disposed within the first prechamber volume and offset from the primary electrode to form one or more electrode gaps; and a second prechamber stage enclosing the second prechamber volume, the second prechamber stage comprising: one or more second stage holes communicating between the second prechamber volume and a combustion chamber volume; introducing one or more fuel in-filling streams to a selected one of the first prechamber volume and the second prechamber volume; and generating a spark across at least one of the one or more electrodes gaps to ignite a fuel-air mixture in the first prechamber volume. The first prechamber volume may be smaller than the second prechamber volume. The first prechamber volume may be less than about 50 % of the second prechamber volume. The one or more fuel in-filling streams may be introduced into the first prechamber volume. The one or more fuel in-filling streams may be introduced into the second prechamber volume. The first prechamber volume may contain a first fuel-air mixture with a first fuel concentration and the second prechamber volume may contain a second fuel-air mixture with a second fuel concentration and the first fuel concentration may be higher than the second fuel concentration. The first fuel concentration may be higher than the second fuel concentration before the spark is generated. The first fuel concentration may be at least about 5 % higher than the second fuel concentration. Each of the one or more first stage holes may define a first stage hole axis and each of the one or more second stage holes may define a second stage hole axis and each first stage hole axis and each second stage hole axis may define an index angle, a penetration angle and a rotational offset. The index angle, the penetration angle, the rotational offset of the first stage holes and the second stage holes, the first prechamber volume and aspect-ratio, the second prechamber volume and aspect-ratio, and the location of one or more spark gaps within the first prechamber volume may be selected to generate a first fuel-air mixture in the first prechamber volume with a higher fuel concentration than a second fuel-air mixture in the second prechamber volume. The method may further comprise providing, cooling to the first stage prechamber to maintain all surface temperatures of the first prechamber below a thermal runaway point dictated by the air fuel mixture composition by the level of combustion mean effective pressure at which the engine operates, 'The method may further comprise providing cooling to the second stage prechamber to maintain all surface temperatures of the second prechamber prevent- dlame quenching and to promote flame propagation speed as dictated by the air-fuel mixture composition and flow dynamic.

In certain embodiments, a method of reducing NOx levels in gas engines is disclosed, comprising: providing a two-stage precombustion chamber comprising: a first prechamber stage enclosing a first prechamber volume, the first prechamber stage comprising: one or more first stage holes communicating between the first prechamber volume and a second prechamber volume; a primary electrode disposed within the first prechamber volume; one or more ground electrodes disposed within the first prechamber volume and offset from the primary electrode to form one or more electrode gaps; and a second prechamber stage comprising: an external surface and an internal surface enclosing the second prechamber volume; and one or more second stage holes communicating between the internal surface and the external surface; introducing one or more fuel in-filling streams to a selected one of the first prechamber volume and the second prechamber volume; and generating a spark across at least one of the one or more electrodes gaps to ignite a fuel-air mixture in the first prechamber volume. The first prechamber volume may be smaller than the second prechamber volume. The first prechamber volume may be less than about 50 ^{%} of the second prechamber volume. The one or more fuel in-filling streams may be introduced into the first prechamber volume. The one or more fuel in-filling streams may be introduced into the second prechamber volume. The first prechamber volume may contain a first fuel-air mixture with a first fuel concentration and the second prechamber volume may contain a second fuel-air mixture with a second fuel concentration and the first fuel concentration may be higher than the second fuel concentration. The first fuel concentration may be higher than the second fuel concentration before the spark is generated. The first fuel concentration may be at least about 5 % higher than the second fuel concentration. Each of the one or more first stage holes may define a first stage hole axis and each of the one or more second stage holes may define a second stage hole axis and each first stage hole axis and each second stage hole axis may define an index angle, a penetration angle and a rotational offset. The index angle, the penetration angle, the rotational offset of the first stage holes and the second stage holes, the first prechamber volume and aspect-ratio, the second prechamber volume and aspect-ratio, the separate fueling and the location of one or more spark gaps within the first prechamber volume may be selected to generate a first fuel-air mixture in the first prechamber volume with a higher fuel concentration than a second fuel-air mixture in the second prechamber volume.

In certain embodiments, a method is disclosed for controlling the admission of fuel to a two-stage precombustion chamber utilizin^{g} an electrically actuated valve, comprisin^{g} adjusting a quantity of fuel admitted and timing of admitting the quantity of fuel relative to engine position to achieve a desired fuel distribution in the two-stage precombustion chamber. At least one of' the quantity of fuel and the timing of admitting the fuel may be adjusted utilizing a closed feedback loop based on one or more previous operating cycles and wherein the feedback loop includes feedback generated from the two-stage precombastion chamber or the main combustion chamber.

In certain embodiments, a method is disclosed for controlling and adjusting the characteristics of a spark discharge event within a two-stage precombustion chamber, comprising utilizing an electronically controlled ignition system to adjust the characteristics of a spark discharge event based on the fuel distribution present in a two-stage precombustion chamber. The characteristics of the spark discharge may be adjusted utilizing a closed feedback loop based on one or more previous operating cycles and wherein the feedback loop includes feedback generated from the two-stage precombastion chamber or the main combustion chamber.

### BRIEF DESCRIPTION OF THE DRAWINGS

Figure 1 depicts two variations of a two-stage precombustion chamber in accordance with certain embodiments.
Figure 2 depicts an exemplary comparison of NOx output between a conventional precombustion chamber with a conventional spark plug and a two-stage precombustion chamber with a passive prechamber spark plug in accordance with certain embodiments.
Figure 3 depicts the total volume of certain embodiments of a passive prechamber spark plug, which may be used as the first stage in a two-stage precombustion chamber in accordance with certain embodiments.
Figure 4 depicts the volume ahead of the gap of certain embodiments of a passive prechamber spark plug, which may be used as the first stage in a two-stage precombustion chamber in accordance with certain embodiments.
Figure 5 depicts the volume behind the gap of certain embodiments of a passive prechamber spark plug, which may be used as the first stage in a two-stage precombustion chamber in accordance with certain embodiments.
Figure 6 depicts an exemplary penetration angle of a passive prechamber spark plug which may be used as the first stage in a two-stage precombustion chamber in accordance with certain embodiments.
Figure 7 depicts an exemplary index angle of a passive prechamber spark plug, which may be used as the first stage in a two-stage precombustion chamber in accordance with certain embodiments.
Figure 8 depicts an exemplary rotational offset of a passive prechamber spark plug, which may be used as the first stage in a two-stage precombustion chamber in accordance with certain embodiments.
Figure 9 depicts an exemplary pattern radius of a passive prechamber spark plug, which may be used as the first stage in a two-stage precombustion chamber in accordance with certain embodiments.
Figure 10 depicts an exemplary prechamber ceiling distance from center electrode of a passive prechamber spark plug, which may be used as the first stage in a two-stage precombustion chamber in accordance with certain embodiments. Figure 11 depicts an exemplary port length of a passive prechamber spark plug, which may be used as the first stage in a two-stage precombustion chamber in accordance with certain embodiments.
Figure 12 depicts an exemplary port diameter of a passive prechamber spark plug, which may be used as the first stage in a two-stage precombustion chamber in accordance with certain embodiments.
Figure 13 depicts an exemplary precombustion chamber insertion depth of a passive prechamber spark plug, which may be used as the first stage in a two-stage precombustion chamber in accordance with certain embodiments.

### DETAILED DESCRIPTION

In certain embodiments, the two-stage precombustion chamber 100 concept disclosed herein, may be used to reduce engine NOx levels, with fueled precombustion chambers, while maintaining comparable engine power output and thermal efficiency.

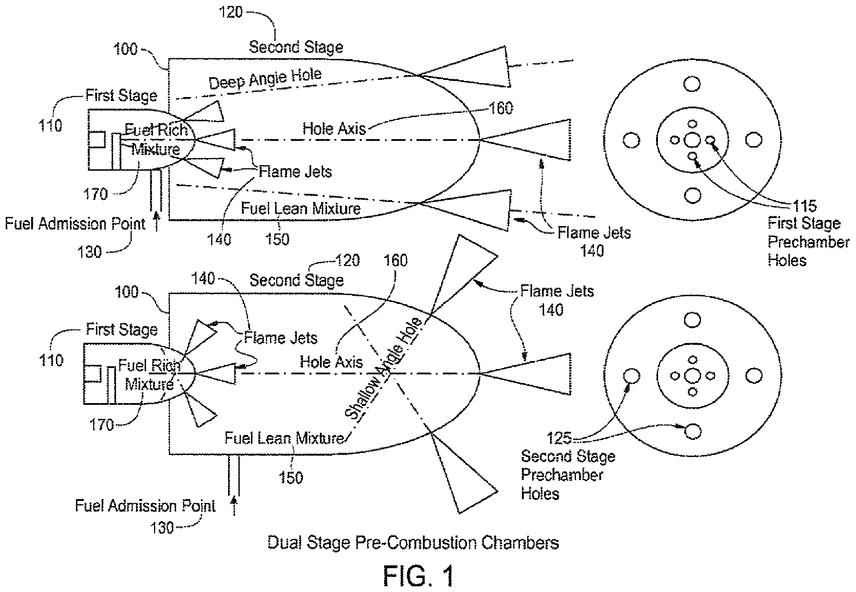

Certain embodiments provide a method and a structure to achieve more effective combustion with leaner mixtures resulting in lower NOx. In certain embodiments as shown in Figure 1, conventional precombustion chambers may be modified so that a first stage of combustion 110 occurs in a relatively small volume, with a relatively fuel rich mixture 170, and a second stage of combustion 120 occurs in a relatively larger volume with a relatively fuel lean mixture 150. In certain embodiments, a more efficient overall combustion characterized by low levels of NOx formation can be achieved by the two-stage precombustion chamber 100 system while generating very high energy flame jets 140 emerging from the second prechamber stage 120 into the main combustion chamber 110.

In certain embodiments the two-stage prechamber 100 system can be achieved by simply replacing a conventional spark plug, used in fueled prechamber, with a passive prechamber spark plug to provide for the first stage prechamber 110 in the two-stage precombustion chamber 100 system.

The amount of NOx produced in a prechamber may be mainly dictated by the air-fuel ratio and by the volume of reactants. As the volume of reactants at the lower air-fuel ratio is decreased, the amount of NOx formed may be proportionally reduced. In certain embodiments, with the 2-stage precombustion, the volume of the fuel rich 170 stage can be reduced by at least a factor of 2, thereby reducing NOx production by approximately a factor of 2. In certain embodiments, the flame jet energy also may be dictated by the air-fuel ratio and by the volume of reactants. As the volume of reactants at the lower air-fuel ratio is decreased, the flame jet energy also may be reduced. In certain embodiments with the two-stage precombustion 100, the second prechamber stage 120, characterized by a relatively leaner mixture 150, is ignited by powerful flame jets 140 emerging from the relatively fuel rich 170 first prechamber 110 stage. The ignition by powerful flame jets 140 may result in a fast combustion of the leaner mixture 150 in the second prechamber stage 120, which may generate high energy flame jets 140 from the second prechamber stage 120. These high energy flame jets 140 may ignite the lean air fuel mixture 150 in the engine main combustion chamber 120 and achieve low overall NOX emissions, while maintaining comparable engine power output and thermal efficiency to a system employing a conventional precombustion chamber.

In certain embodiments as shown in Figure 1 the volume of the first prechamber stage 110 may be substantially smaller than the volume of the second prechamber stage 120. The volume of the first prechamber stage 110 may be less than about 50% of the volume of the second prechamber stage 120.

In certain embodiments, either the first prechamber stage 110 or the second prechamber stage 120 can be fueled directly by a separate fuel line. In Figure I higher fuel concentration is depicted by a darker blue fill color. In certain embodiments, if the first prechamber stage 110 is fueled directly by a separate fuel admission point 130 as shown in the top two figures of Figure 1, a richer first fuel concentration in the first prechamber 110 stage may result than if the second prechamber 120 stage is fueled directly by a separate fuel admission point 130 than as shown in the bottom two figures of Figure I. Conversely, a second fuel concentration in the second prechamber 120 stage may be leaner if the first prechamber 110 stage is fuel directly by a separate fuel admission point 130 as shown in the top two figures of Figure 1 than if the second prechamber 120 stage is fueled directly by a separate fuel admission point 130 than as shown in the bottom two figures of Figure I. Performance may be improved in comparison to conventional single stage precombustion chambers by either fueling the first prechamber 110 stage or the second prechamber 120 stage directly. In certain embodiments, a passive prechamber (PPC) spark plug may be used as the first prechamber 110 stage. In certain embodiments, a fuel-fed second prechamber 120 stage may be used in conjunction with a PPC spark plug as the first prechamber stage 110.

In certain embodiments, the communication between the first prechamber 110 stage, the second prechamber 120 stage and the main combustion chamber may occur through one or more holes with a predetermined relative pattern and angles. In certain embodiments, the one or more holes may include one or more first stage holes 115 for communicating between the first prechamber 110 stage and the second prechamber 120 stage and one or more second stage holes 125 for communicating between the second prechamber 120 stage and the main combustion chamber. In certain embodiments, each of the one or more first stage holes 115 may define a first stage hole axis 160 and each of the one or more second stage holes 125 may define a second stage hole axis 160. Each first stage hole axis 160 and each second stage hole axis 160 may define an index angle 610, a penetration angle 600 and a rotational offset 620. The index angle 610, the penetration angle 600 and the rotational offset 620 of the first stage holes 115 and the second stage holes 125 may be selected to generate a first fuel concentration in the first prechamber 110 stage that is higher than a second fuel concentration in the second prechamber stage 120. In certain embodiments, the volumes and aspect ratios of the two prechamber stages, along with the location of the electrodes within the first stage prechamber 110, the hole patterns, angles and the separate fueling, may be selected to create a first fuel concentration in the first prechamber 110 stage that is substantially higher than a second fuel concentration in the second prechamber 120 stage.

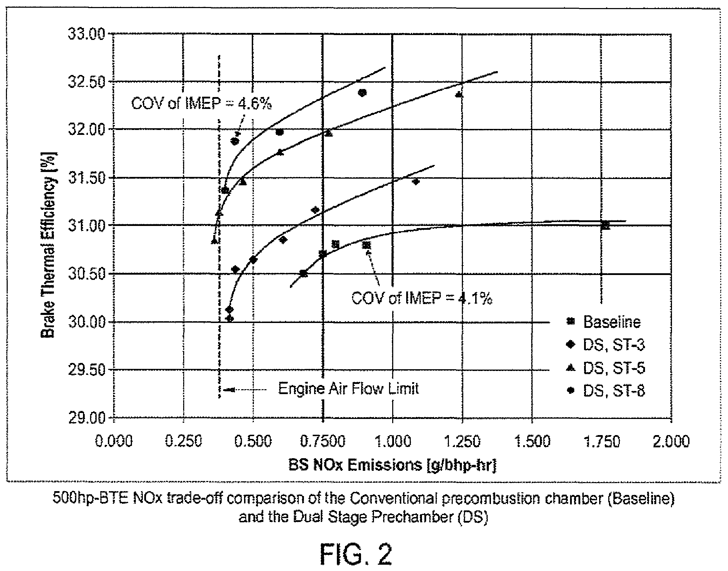

Figure 2 shows exemplary results for reduction of NOx output achieved with a two-stage precombustion chamber system 100 with a PPC spark plug as compared to a conventional precombustion chamber with a conventional spark plug. The results shown in the Figure 2 demonstrate that lower NOX emissions were achieved without penalty in engine thermal efficiency with this non-optimized system. Therefore, there is a great potential for an optimized two-stage precombustion chamber system 100 with a PPC spark plug, to achieve stable operation with leaner mixtures in the precombustion chamber resulting in very low NOX emissions, much below the 0.5 g/bhp-hr level.

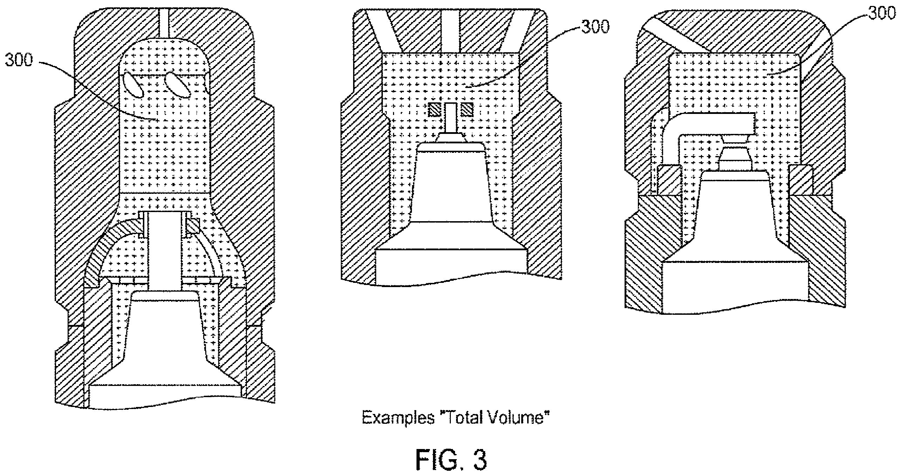

In certain embodiments, the physical parameters shown in Figures 3-13 may be varied alone or in combination to vary the first fuel concentration in the first prechamber **110** stage and the second fuel concentration in the second prechamber 120 stage to result in a higher first fuel concentration than the second fuel concentration.

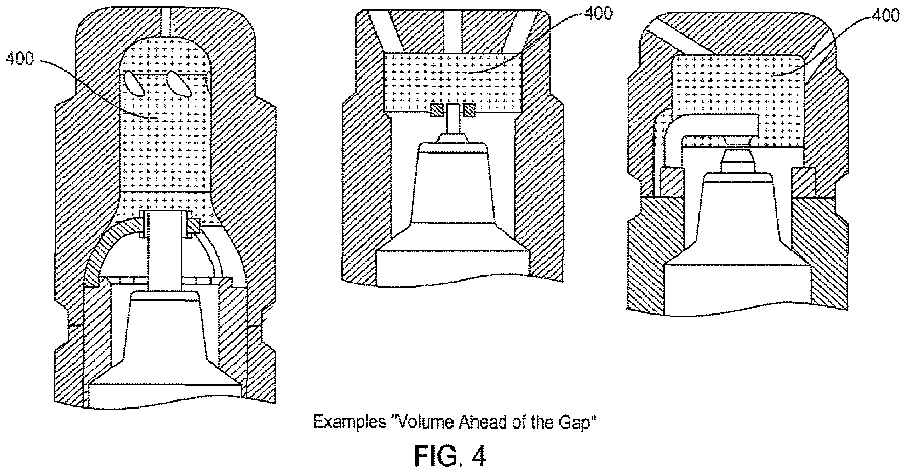

As shown in Figure 3, Total Volume 300 may be defined as the volume of air inside the prechamber spark plug not including the volume of the ports/holes. As shown in Figure 4, Volume Ahead of the Gap 400 may be defined as the volume of air inside the prechamber spark plug from the center of the gap to the endcap not including the volume of the ports/holes.

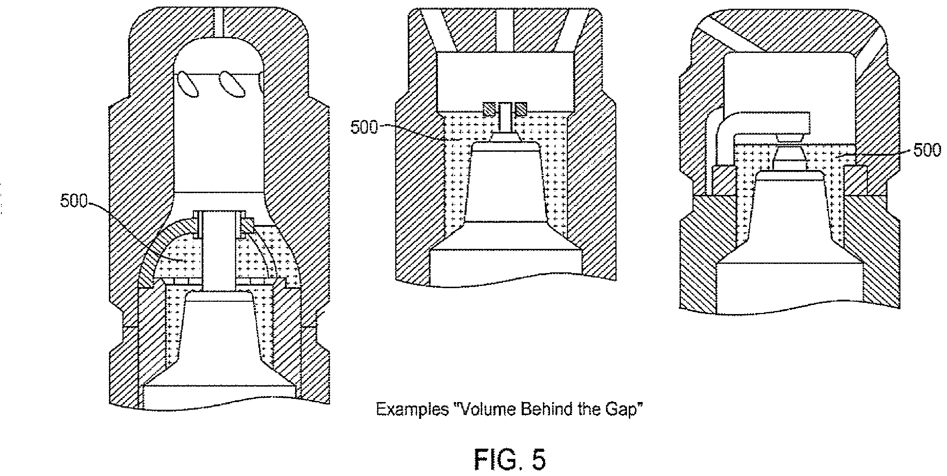

As shown in Figure 5, Volume Behind the Gap 500 may be defined as the volume of air inside the prechamber spark plug between the center of the gap and the rear of the prechamber not including the volume of any ports/holes that may be at the rear of the prechamber.

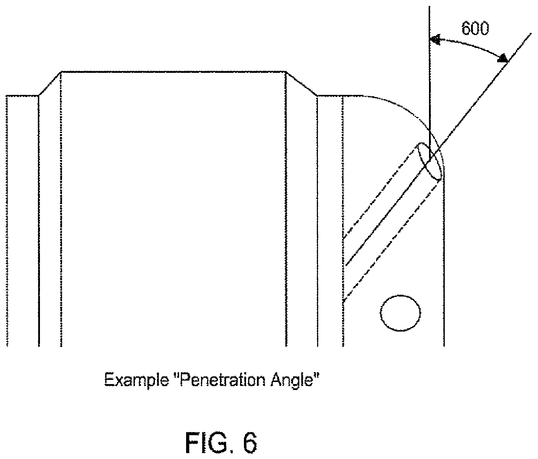

As shown in Figure 6, the Penetration Angle 600 may be defined as the angle between the plane perpendicular to the axis 160 of the prechamber spark plug and the centerline of the port/hole.

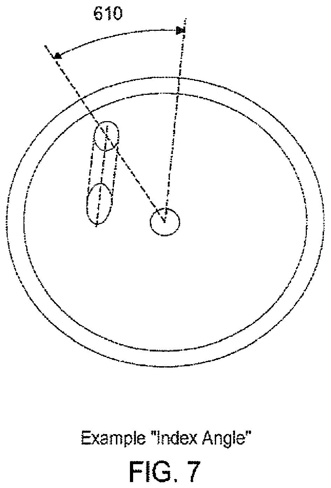

As shown in Figure 7, the Index Angle 610 may be defined as the angle of rotation about the axis 160 of the prechamber spark plug and the location on the port where the centerline of the port meets the front plane of the prechamber spark plug.

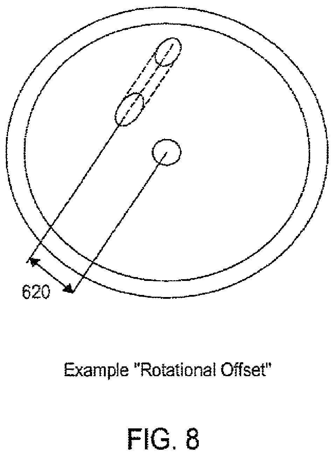

As shown in Figure 8, Rotational Offset 620 may be defined as the perpendicular distance between the axis 160 of the prechamber spark plug and the centerline of the port/hole (measured on the plane at the front of the prechamber spark plug).

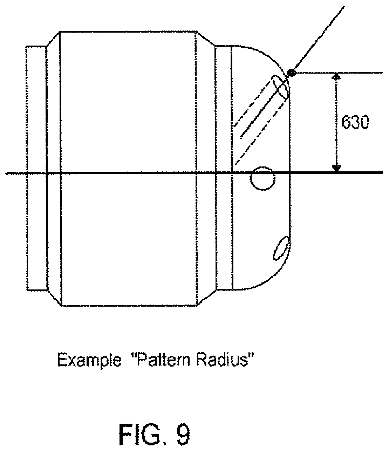

As shown in Figure 9, the Pattern Radius 630 may be defined as the perpendicular distance from the axis 160 of the prechamber spark plug to the centerline of the port/hole, measured at the front plane of the endcap.

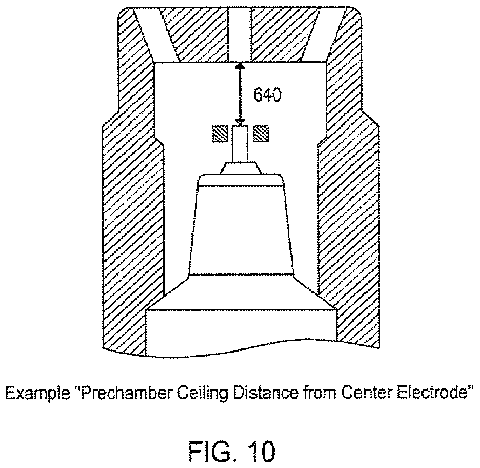

As shown in Figure 10, the Prechamber Ceiling Distance 640 from the Center Electrode may be defined as the distance along the axis 160 of the prechamber spark plug from the top of the center electrode to the inside of the endcap.

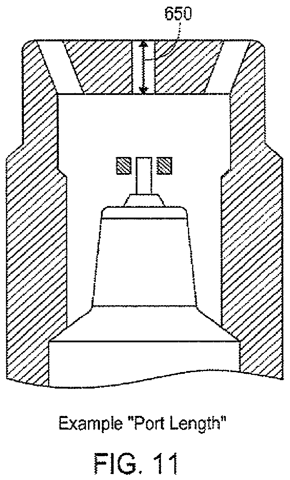

As shown in Figure 11, the Port Length 650 may be defined as the length of the port/hole, measured along the centerline of the port/hole, from the inside of the endcap to the outside of the endcap.

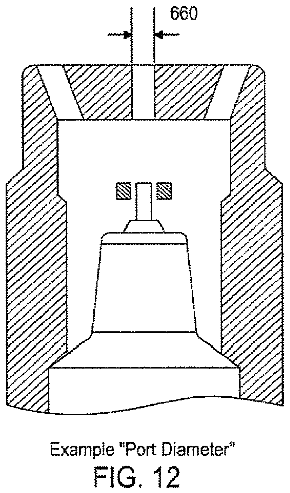

As shown in Figure 12, the Port Diameter 660 may be defined as the diameter of the port/hole.

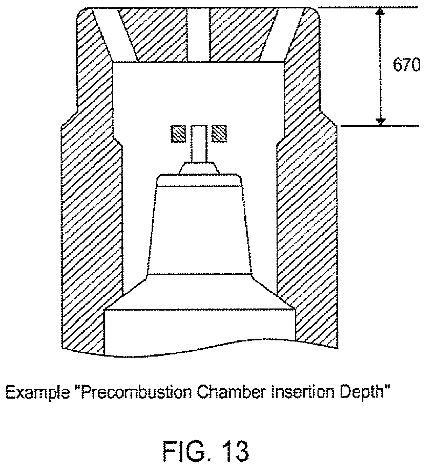

As shown in Figure 13, the Precombustion Chamber Insertion Depth 670 may be defined as the distance from the firing deck to the end of the prechamber spark plug. As shown, Figure 9 assumes that the firing deck is located at the end of the threads.

## Claims

1. A two-stage precombustion chamber (100) comprising:
a first prechamber stage (110) enclosing a first prechamber volume, the first prechamber stage (110) comprising:
a plurality of first stage holes (115) communicating between the first prechamber volume and a second prechamber volume;
a primary electrode disposed within the first prechamber volume; and
one or more ground electrodes disposed within the first prechamber volume and
offset from the primary electrode to form one or more electrode gaps; and
a second prechamber stage (120) enclosing the second prechamber volume, the second prechamber stage (120) comprising:
one or more second stage holes (125) communicating between the second prechamber volume and a combustion chamber volume,
**characterized in that** a rotational offset defined as a perpendicular distance between the axis (160) of a prechamber spark plug formed by said primary electrode and said ground electrode and the center line of each of the first stage holes measured on the plane at the front of the prechamber spark plug is provided,
wherein each of the plurality of first stage holes defines a first stage hole axis and each of the one or more second stage holes defines a second stage hole axis and
wherein each first stage hole axis and each second stage hole axis defines a penetration angle and wherein each second stage hole axis defines the rotational offset.

2. The two-stage precombustion chamber of claim 1, wherein the first prechamber volume is smaller than the second prechamber volume, in particular wherein the first prechamber volume is less than about 50% of the second prechamber volume.

3. The two-stage precombustion chamber of claim 1, further comprising a fuel admission point configured to admit fuel into the first prechamber volume.

4. The two-stage precombustion chamber of claim 1, further comprising a fuel admission point configured to admit fuel into the second prechamber volume.

5. The two-stage precombustion chamber of claim 1, wherein said second prechamber stage comprises an external surface and an internal surface enclosing the second prechamber volume; and wherein said one or more second stage holes are communicating between the internal surface and the external surface.

6. A method of reducing NOx levels in gas engines, comprising:
providing a two-stage precombustion chamber comprising:
a first prechamber stage enclosing a first prechamber volume, the first prechamber stage comprising:
a plurality of first stage holes communicating between the first prechamber volume and a second prechamber volume;
a primary electrode disposed within the first prechamber volume;
one or more ground electrodes disposed within the first prechamber volume and offset from the primary electrode to form one or more electrode gaps; and
a second prechamber stage enclosing the second prechamber volume, the second prechamber stage comprising:
one or more second stage holes communicating between the second prechamber volume and a combustion chamber volume;
introducing one or more fuel admission points to a selected one of the first prechamber volume and the second prechamber volume; and
generating a spark across at least one of the one or more electrodes gaps to ignite a fuel-air mixture in the first prechamber volume
**characterized in that** said spark is generated by said primary electrode and said ground electrode forming a prechamber spark plug which axis (160) is rotational offset from the center line of each of the first stage holes, wherein said offset is defined as a perpendicular distance between the axis (160) and the center line of the first stage hole(s) measured on the plane at the front of the prechamber spark plug,
wherein each of the plurality of first stage holes defines a first stage hole axis and each of the one or more second stage holes defines a second stage hole axis and
wherein each first stage hole axis and each second stage hole axis defines a penetration angle and wherein each second stage hole axis defines the rotational offset.

7. The method of claim 6, wherein the first prechamber volume is smaller than the second prechamber volume, in particular wherein the first prechamber volume is less than about 50% of the second prechamber volume.

8. The method of claim 6, wherein the one or more fuel admission points is introduced into the first prechamber volume.

9. The method of claim 6, wherein the one or more fuel admission points is introduced into the second prechamber volume.

10. The method of claim 6 wherein said second prechamber stage comprises:
an external surface and an internal surface enclosing the second prechamber volume and one or more second stage holes communicating between the internal surface and the external surface.

## Patentansprüche

1. Z weistufige Vorbrennkammer (100), umfassend:
eine erste Vorkammerstufe (110), die ein erstes Vorkammervolumen umschließt, wobei die erste Vorkammerstufe (110) umfasst:
eine Vielzahl von Bohrungen der ersten Stufe (115), die eine Verbindung zwischen dem ersten Vorkammervolumen und einem zweiten Vorkammervolumen herstellen;
eine Primärelektrode, die innerhalb des ersten Vorkammervolumens angeordnet ist; und
eine oder mehrere Masseelektroden, die innerhalb des ersten Vorkammervolumens und von der Primärelektrode versetzt angeordnet sind, um einen oder mehrere Elektrodenzwischenräume zu bilden; und
eine zweite Vorkammerstufe (120), die das zweite Vorkammervolumen umschließt, wobei die zweite Vorkammerstufe (120) umfasst:
eine oder mehrere Bohrungen der zweiten Stufe (125), die eine Verbindung zwischen dem zweiten Vorkammervolumen und einem Brennkammervolumen herstellen,
**dadurch gekennzeichnet, dass** ein Rotationsversatz vorgesehen ist, der als ein senkrechter Abstand zwischen der Achse (160) einer Vorkammerzündkerze, die durch die Primärelektrode und die Masseelektrode gebildet wird, und der Mittelachse jeder der Bohrungen der ersten Stufe, gemessen in der Ebene an der Stirnseite der Vorkammerzündkerze, definiert ist,
wobei jede der Vielzahl von Bohrungen der ersten Stufe jeweils eine Achse der jeweiligen Bohrung der ersten Stufe definiert und jede der einen oder mehreren Bohrungen der zweiten Stufe jeweils eine Achse der jeweiligen Bohrung der zweiten Stufe definiert, und wobei jede Achse der jeweiligen Bohrung der ersten Stufe und jede Achse der jeweiligen Bohrung der zweiten Stufe jeweils einen Eindringwinkel definiert und wobei jede Achse der jeweiligen Bohrung der zweiten Stufe den Rotationsversatz definiert.

2. Zweistufige Vorbrennkammer nach Anspruch 1, wobei das erste Vorkammervolumen kleiner ist als das zweite Vorkammervolumen, insbesondere wobei das erste Vorkammervolumen kleiner als etwa 50 % des zweiten Vorkammervolumens ist.

3. Zweistufige Vorbrennkammer nach Anspruch 1, ferner umfassend eine Kraftstoffeinlassöffnung, die konfiguriert ist, Kraftstoff in das erste Vorkammervolumen einzulassen.

4. Zweistufige Vorbrennkammer nach Anspruch 1, ferner umfassend eine Kraftstoffeinlassöffnung, die konfiguriert ist, Kraftstoff in das zweite Vorkammervolumen einzulassen.

5. Zweistufige Vorbrennkammer nach Anspruch 1, wobei die zweite Vorkammerstufe eine Außenfläche und eine Innenfläche aufweist, die das zweite Vorkammervolumen umschließen; und wobei die eine oder mehreren Bohrungen der zweiten Stufe eine Verbindung zwischen der Innenfläche und der Außenfläche herstellen.

6. Verfahren zum Reduzieren von NOx-Werten in Gasmotoren, umfassend:
Bereitstellen einer zweistufigen Vorbrennkammer, umfassend:
eine erste Vorkammerstufe, die ein erstes Vorkammervolumen umschließt, wobei die erste Vorkammerstufe umfasst:
eine Vielzahl von Bohrungen der ersten Stufe, die eine Verbindung zwischen dem ersten Vorkammervolumen und einem zweiten Vorkammervolumen herstellen;
eine Primärelektrode, die innerhalb des ersten Vorkammervolumens angeordnet ist;
eine oder mehrere Masseelektroden, die innerhalb des ersten Vorkammervolumens und in Bezug zu der Primärelektrode versetzt angeordnet sind, um einen oder mehrere Elektrodenzwischenräume zu bilden; und
eine zweite Vorkammerstufe, die das zweite Vorkammervolumen umschließt, wobei die zweite Vorkammerstufe umfasst:
eine oder mehrere Bohrungen der zweiten Stufe, die eine Verbindung zwischen dem zweiten Vorkammervolumen und einem Brennkammervolumen herstellen;
Anordnen von einer oder mehreren Kraftstoffeinlassöffnungen in einem ausgewählten Vorkammervolumen aus der Gruppe bestehend aus dem ersten und dem zweiten Vorkammervolumen; und
Erzeugen eines Funkens über mindestens einen der einen oder mehreren Elektrodenzwischenräume, um ein Kraftstoff-Luft-Gemisch im ersten Vorkammervolumen zu entzünden,
**dadurch gekennzeichnet, dass** der Funke durch die Primärelektrode und die Masseelektrode erzeugt wird, welche eine Vorkammerzündkerze bilden, deren Achse (160) in Bezug auf die Mittelachse jeder der Bohrungen der ersten Stufe rotationsversetzt angeordnet ist, wobei der Rotationsversatz als ein senkrechter Abstand zwischen der Achse (160) und der Mittelachse der jeweiligen Bohrung(en) der ersten Stufe, gemessen in einer Ebene an der Stirnseite der Vorkammerzündkerze, definiert ist,
wobei jede der Vielzahl von Bohrungen der ersten Stufe jeweils eine Achse der jeweiligen Bohrung der ersten Stufe definiert und jede der einen oder mehreren Bohrungen der zweiten Stufe jeweils eine Achse der jeweiligen Bohrung der zweiten Stufe definiert, und
wobei jede Achse der Bohrungen der ersten Stufe und jede Achse der Bohrungen zweiten Stufe jeweils einen Eindringwinkel definiert und wobei jede Achse der Bohrungen der zweiten Stufe den Rotationsversatz definiert.

7. Verfahren nach Anspruch 6, wobei das erste Vorkammervolumen kleiner ist als das zweite Vorkammervolumen, insbesondere wobei das erste Vorkammervolumen kleiner als etwa 50 % des zweiten Vorkammervolumens ist.

8. Verfahren nach Anspruch 6, wobei die eine oder mehreren Kraftstoffeinlassöffnungen in dem ersten Vorkammervolumen angeordnet sind.

9. Verfahren nach Anspruch 6, wobei die eine oder mehreren Kraftstoffeinlassöffnungen in dem zweiten Vorkammervolumen angeordnet sind.

10. Verfahren nach Anspruch 6, wobei die zweite Vorkammerstufe umfasst:
eine Außenfläche und eine Innenfläche, die das zweiten Vorkammervolumen umschließen, sowie eine oder mehrere Bohrungen der zweiten Stufe, die eine Verbindung zwischen der Innenfläche und der Außenfläche herstellen.

## Revendications

1. Chambre de précombustion à deux étages (100) comprenant :
un premier étage de préchambre (110) renfermant un premier volume de préchambre, le premier étage de préchambre (110) comprenant :
une pluralité de trous de premier étage (115) communiquant entre le premier volume de préchambre et un deuxième volume de préchambre ;
une électrode primaire disposée à l'intérieur du premier volume de préchambre ; et
une ou plusieurs électrodes de masse disposées à l'intérieur du premier volume de préchambre et décalées par rapport à l'électrode primaire pour former un ou plusieurs espaces d'électrode ; et
un deuxième étage de préchambre (120) renfermant le deuxième volume de préchambre, le deuxième étage de préchambre (120) comprenant :
un ou plusieurs trous de deuxième étage (125) communiquant entre le deuxième volume de préchambre et un volume de chambre de combustion,
**caractérisée en ce qu'**un décalage en rotation défini comme une distance perpendiculaire entre l'axe (160) d'une bougie d'allumage de préchambre formée par ladite électrode primaire et ladite électrode de masse et la ligne centrale de chacun des trous de premier étage mesurée sur le plan à l'avant de la bougie d'allumage de préchambre est fourni,
dans laquelle chacun de la pluralité de trous de premier étage définit un axe de trou de premier étage et chacun des un ou plusieurs trous de deuxième étage définit un axe de trou de deuxième étage et dans laquelle chaque axe de trou de premier étage et chaque axe de trou de deuxième étage définit un angle de pénétration et dans laquelle chaque axe de trou de deuxième étage définit le décalage en rotation.

2. Chambre de précombustion à deux étages selon la revendication 1, dans laquelle le premier volume de préchambre est inférieur au deuxième volume de préchambre, en particulier dans laquelle le premier volume de préchambre est inférieur à environ 50 % du deuxième volume de préchambre.

3. Chambre de précombustion à deux étages selon la revendication 1, comprenant en outre un point d'admission de carburant configuré pour admettre du carburant dans le premier volume de préchambre.

4. Chambre de précombustion à deux étages selon la revendication 1, comprenant en outre un point d'admission de carburant configuré pour admettre du carburant dans le deuxième volume de préchambre.

5. Chambre de précombustion à deux étages selon la revendication 1, dans laquelle ledit deuxième étage de préchambre comprend une surface externe et une surface interne renfermant le deuxième volume de préchambre ; et dans laquelle lesdits un ou plusieurs trous de deuxième étage sont en communication entre la surface interne et la surface externe.

6. Procédé de réduction de niveaux de NOx dans des moteurs à gaz, comprenant :
la fourniture d'une chambre de précombustion à deux étages comprenant :
un premier étage de préchambre renfermant un premier volume de préchambre, le premier étage de préchambre comprenant :
une pluralité de trous de premier étage communiquant entre le premier volume de préchambre et un deuxième volume de préchambre ;
une électrode primaire disposée à l'intérieur du premier volume de préchambre ;
une ou plusieurs électrodes de masse disposées à l'intérieur du premier volume de préchambre et décalées par rapport à l'électrode primaire pour former un ou plusieurs espaces d'électrode ; et
un deuxième étage de préchambre renfermant le deuxième volume de préchambre, le deuxième étage de préchambre comprenant :
un ou plusieurs trous de deuxième étage communiquant entre le deuxième volume de préchambre et un volume de chambre de combustion ;
l'introduction d'un ou plusieurs points d'admission de carburant dans un volume sélectionné parmi le premier volume de préchambre et le deuxième volume de préchambre ; et
la génération d'une étincelle à travers au moins un des un ou plusieurs espaces d'électrodes pour allumer un mélange carburant-air dans le premier volume de préchambre
**caractérisé en ce que** ladite étincelle est générée par ladite électrode primaire et ladite électrode de masse formant une bougie d'allumage de préchambre dont l'axe (160) est décalé en rotation par rapport à la ligne centrale de chacun des trous de premier étage, dans lequel ledit décalage est défini comme une distance perpendiculaire entre l'axe (160) et la ligne centrale du(des) trou(s) de premier étage mesurée sur le plan à l'avant de la bougie d'allumage de préchambre,
dans lequel chacun de la pluralité de trous de premier étage définit un axe de trou de premier étage et chacun des un ou plusieurs trous de deuxième étage définit un axe de trou de deuxième étage et dans lequel chaque axe de trou de premier étage et chaque axe de trou de deuxième étage définit un angle de pénétration et dans lequel chaque axe de trou de deuxième étage définit le décalage en rotation.

7. Procédé selon la revendication 6, dans lequel le premier volume de préchambre est inférieur au deuxième volume de préchambre, en particulier dans lequel le premier volume de préchambre est inférieur à environ 50 % du deuxième volume de préchambre.

8. Procédé selon la revendication 6, dans lequel les un ou plusieurs points d'admission de carburant sont introduits dans le premier volume de préchambre.

9. Procédé selon la revendication 6, dans lequel les un ou plusieurs points d'admission de carburant sont introduits dans le deuxième volume de préchambre.

10. Procédé selon la revendication 6 dans lequel ledit deuxième étage de préchambre comprend :
une surface externe et une surface interne renfermant le deuxième volume de préchambre et un ou plusieurs trous de deuxième étage communiquant entre la surface interne et la surface externe.
